# EUROPEAN PATENT SPECIFICATION

(11) **EP 0 971 116 B1**
(45) Date of publication and mention of the grant of the patent: **03.12.2003**
(21) Application number: 99109450.9
(22) Date of filing: 11.05.1999
(51) Int. Cl.: F02F 1/24, F02F 1/42

(54) **Internal combustion engine**
Brennkraftmaschine
Moteur à combustion interne

(30) Priority: 11.05.1998 JP 12796498; 14.05.1998 JP 13092798
(43) Date of publication of application: 12.01.2000
(73) Proprietor: YAMAHA HATSUDOKI KABUSHIKI KAISHA, Iwata-shi Shizuoka-ken (JP)
(72) Inventor: Takano, Tomotaka, Iwata-shi, Shizuoka-ken (JP)
(74) Representative: Grünecker, Kinkeldey, Stockmair & Schwanhäusser Anwaltssozietät

(56) References cited:
- DE-A- 19 708 288
- US-A- 5 724 927

## Description

This invention relates to an internal combustion engine comprising a cylinder block, a cylinder head fastened to said cylinder block, at least one cylinder formed in said cylinder block, said cylinder having a combustion chamber formed by a reciprocable piston within said cylinder and by said cylinder head, a first pair of intake passages opening into said combustion chamber and an injector for injecting fuel into said combustion chamber.

Engines to be mounted on vehicles include one, for example, that comprises a pair of intake passages opening to a combustion chamber with the upstream sides of the paired intake passages joined together, and an injector for injecting fuel into the combustion chamber.

Such an engine is known from e.g. US 5 724 927.

Incidentally, the cross-sectional shape of the intake passage is in most cases circular. Therefore, when it is intended to use a pair of intake passages opening to the combustion chamber and to dispose an injector for injecting fuel into the combustion chamber in a position between the paired intake passages, the intake passages interfere with the injector and makes efficient layout difficult. As a result, it is inevitable to take measures by increasing the size of the engine or reducing the diameters of the intake passages.

The circular cross section of the intake passage gives rise to another problem: To form the paired intake passages, the part between the intake passages must be thickened with the passage material, which results in the increase in weight.

Accordingly, it is an objective of the present invention to provide an internal combustion engine as indicated above facilitating a compact construction, a space saving disposal of the injector and, simultaneously, guarantees the required intake air amount.

According to the present invention, this objective is solved in that said first pair of intake passages being provided with attachment recesses for accommodating said injector.

In that case, it is advantageous when said injector is disposed between said first pair of intake passages and at their respective undersides. This ensures that the respective intake passages may be provided with desired angles with respect to the cylinder bore axis.

According to another embodiment of the present invention, said first pair of intake passages being provided within said cylinder head and that at the respective upstream ends a respective second pair of intake passages are connected being the downstream part of a single intake passage.

In order to save space and enhance the design possibilities, it is advantageous when the cross-sections of said first and second, respectively, pairs of intake passages being square-shaped.

A certain precompression of the intake air amount is achievable when the respective cross-sections of said first and second pairs of intake passages are increasing starting from respective openings into the combustion chamber of said first pair of intake passages.

According to an advantageous embodiment of the invention, the internal combustion engine comprises; a pair of intake passages opening to a combustion chamber with the upstream sides of the paired intake passages joined together, and an injector for injecting fuel into the combustion chamber, wherein the injector is disposed at a position below and between the paired intake passages and that a recessed attachment space is provided so that the injector may be disposed to enter the space below and between the paired intake passages.

According to this embodiment, the structure is made compact and easy to secure the space for installing the injector while securing the intake amount as the recessed attachment space is provided so that the injector may be disposed to enter the space below and between the paired intake passages.

Another embodiment of the present invention is characterized in that the cross-sections of the paired intake passages are square-shaped.

According to this another embodiment, the part between the intake passages need not be thickened because the cross-sections of the paired intake passages are square-shaped. As a result, the internal combustion engine is made lightweight and compact.

A further embodiment of the present invention is characterized in that a swirl control valve is provided in one of the intake passages and that the injector is disposed on the downstream side of the swirl control valve.

With this further embodiment, the structure is made lightweight and compact while securing the same flow rate because the swirl control valve is disposed efficiently.

Other preferred embodiments of the present invention are laid down in further dependent claims.

In the following, the present invention is explained in greater detail with respect to several embodiments thereof in conjunction with the accompanying drawings, wherein:

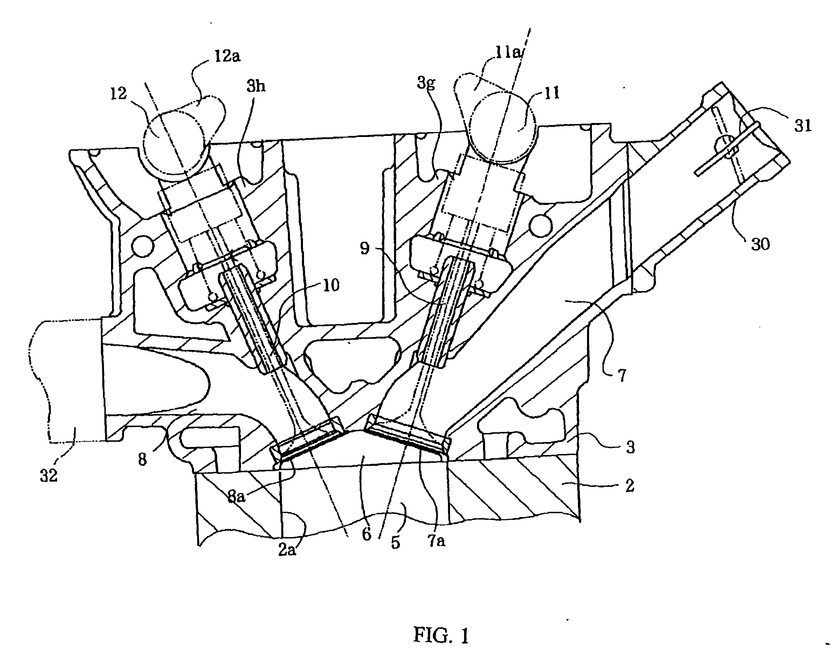

FIG. 1 shows a cross section of part of an internal combustion engine including the intake passage and exhaust passage,

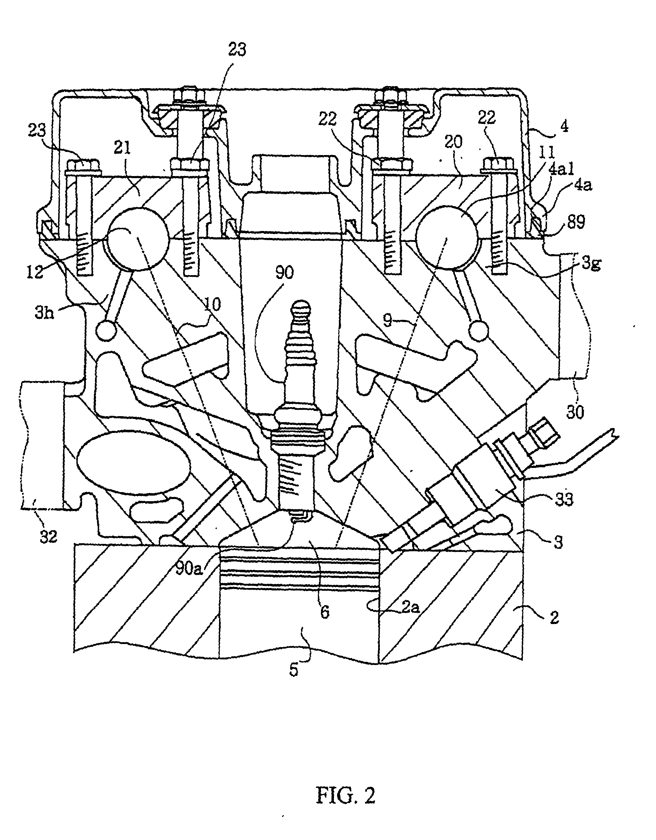

FIG. 2 shows a cross section of part of the internal combustion engine including an ignition plug,
FIG. 3 is a side view of the cylinder head,
FIG. 4 is a side view of the intake pipe,

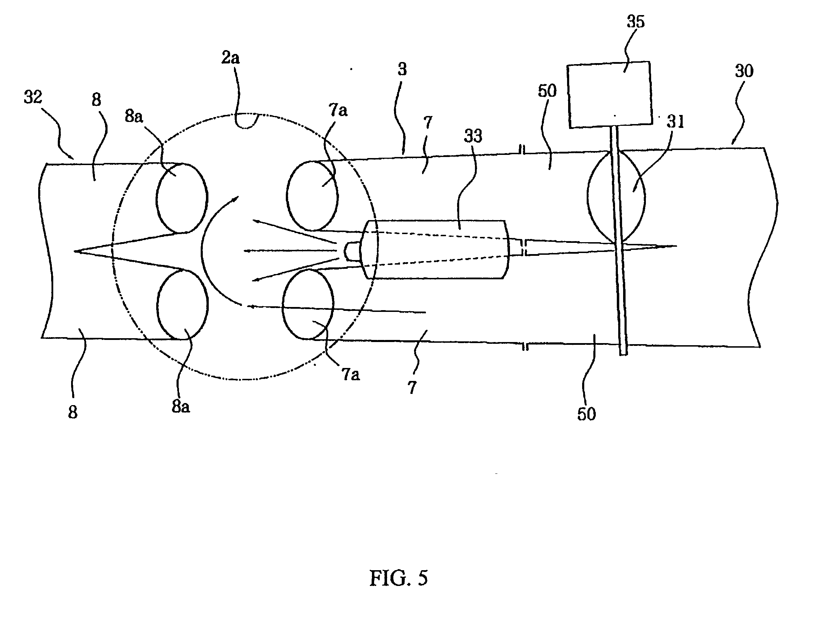

FIG. 5 is a simplified drawing showing the air flow through the intake passages,

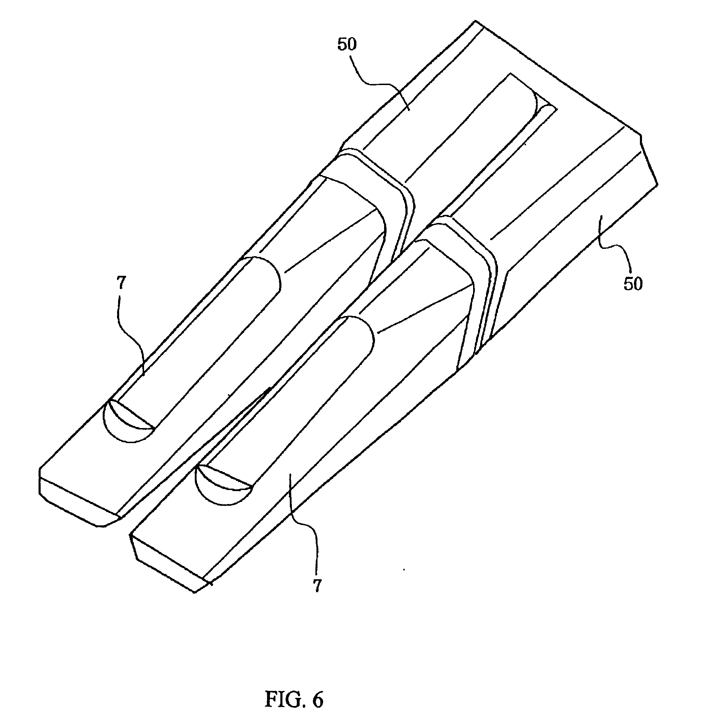

FIG. 6 is a perspective view showing the shape of the intake passages as seen from above, and

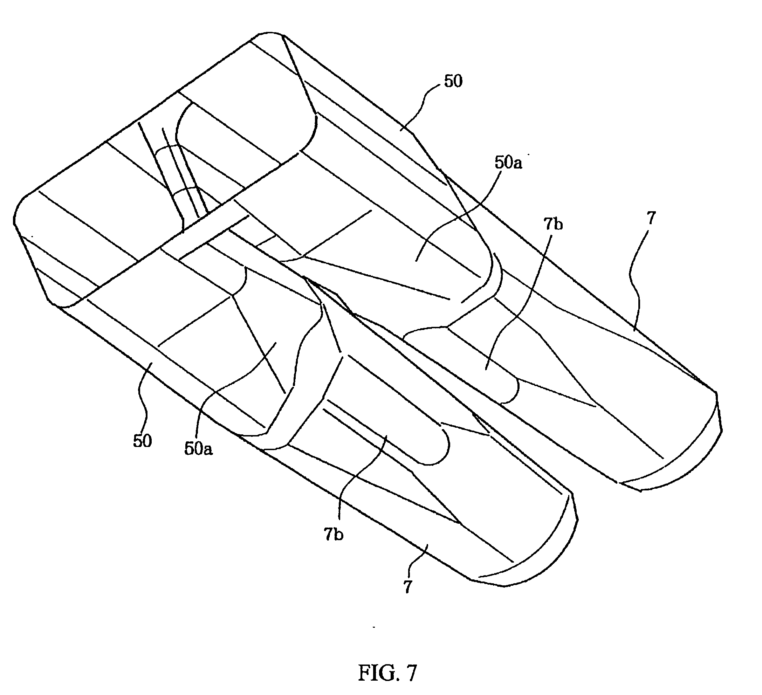

FIG. 7 is a perspective view showing the shape of the intake passages as seen from under.

Embodiments of the invention will be hereinafter described in reference to the appended drawings.

The internal combustion engine 1 is of a three-cylinder, four-stroke-cycle type comprising a cylinder block 2 and a cylinder head 3 placed on the cylinder block 2. A head cover 4 is secured to the cylinder head 3. Pistons 5 for reciprocating motion are disposed in cylinders 2a formed in the cylinder block 2. Each of combustion chambers 6 is formed with the piston 5 and the cylinder head 3.

The cylinder head 3 is provided with two intake passages 7 and two exhaust passages 8 respectively corresponding to each of the three cylinders. The openings 7a of the intake passages 7 and the openings 8a of the exhaust passages 8 are formed to face the combustion chamber 6. The cylinder head 3 is provided with an intake passage 30 communicating with the intake passages 7. The intake passage 30 is provided with a swirl control valve 31 for producing a swirl flow in the low revolution range. The cylinder head 3 is also provided with an exhaust pipe 32 communicating with the exhaust passages 8. The cylinder head 3 is further provided with an injector 33 for injecting fuel directly into the combustion chamber 6.

The cylinder head 3 is further provided with intake valves 9 and exhaust valves 10 for respectively opening and closing the intake passages 7 and exhaust passages 8. An ignition plug 90 is provided in the central part of the cylinder head 3, with its igniting portion 90a facing the center of the combustion chamber 6.

The constitutions of the intake valve 9 and the exhaust valve 10 are similar to each other. Cam shafts 11 and 12 of a valve drive mechanism are disposed over the intake valves 9 and the exhaust valves 10 and made rotatable in journal bearing portions 3g and 3h formed in the cylinder head 3. Cam caps 20 and 21 are tightened over the journal bearing portions 3g and 3h by means of bolts 22 and 23.

The camshaft 11 on the intake side is provided with cams 11a at positions corresponding to the intake valves 9. The camshaft 12 on the exhaust side is formed with cams 12a at positions corresponding to the exhaust valves 10. The camshafts 11 and 12 are provided with gears (not shown) so that the camshafts rotate as interlocked with the crankshaft. As the camshafts 11 and 12 rotate, the cams 11a drive the intake valves 9 while the cams 12a drive the exhaust valves 10 to open and close the openings 7a of the intake passages 7 and the openings 8a of the exhaust passages 8 with predetermined timing.

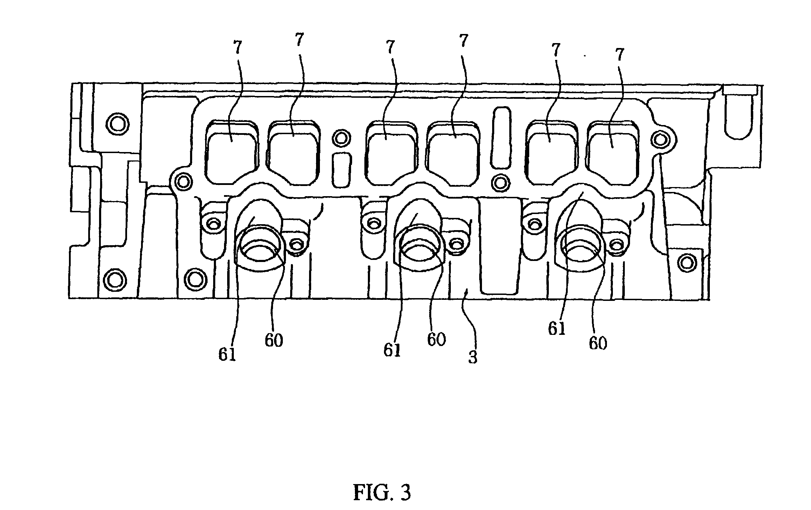

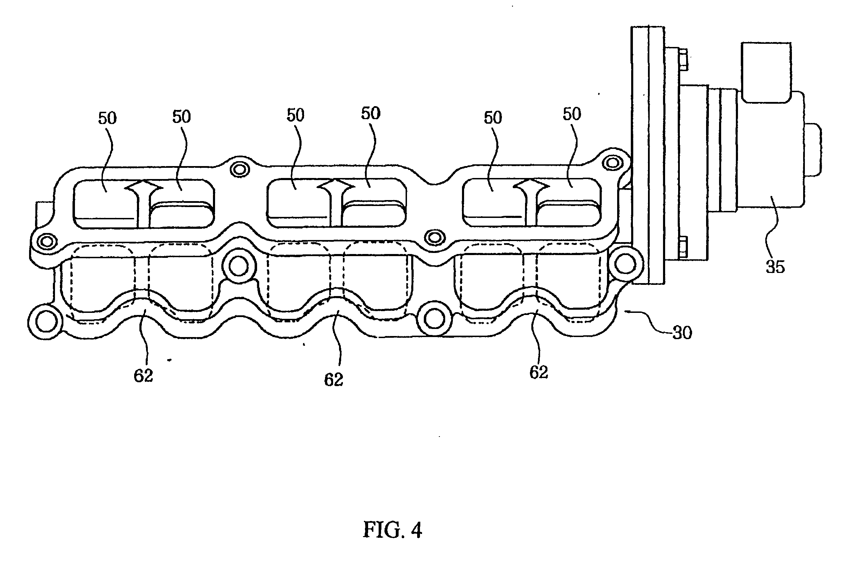

As shown in FIGs. 3. 6 and 7. upstream side of each intake passage 7 formed in the cylinder head 3 is formed to be square-shaped in cross-section. An intake pipe or intake passage 30 is connected to the intake side of the cylinder head 3. Two intake passages 50 are formed in each of the three intake pipes 30 corresponding to the three cylinders. The intake passages 50 of the intake pipe 30 are square-shaped in cross section as shown in FIG. 4 and communicate with the intake passages 7 in the cylinder head 3. The swirl control valve 31 is disposed in one of the intake passages 50 and driven with a driving motor 35. Swirl is produced in the low revolution range as follows: The driving motor 35 is controlled according to the operating state such as revolution of the engine, the swirl control valve 31 is driven with the driving motor 35 so as to control the intake air amount, and the air flow rate through the other intake passage 50 is controlled. The upstream sides of the intake passages 50 of the intake pipe 30 are joined together.

The injector 33 is disposed at a position on the downstream side of the swirl control valve 31 and under and between the paired intake passages 7 and 50. The cylinder head 3 is formed with an attachment hole 60 and an attachment recess 61 for attaching the injector 33. The intake pipe 30 is formed with an attachment recess 62. With the attachment recesses 61, 62, attachment recesses 7b, 50a are formed under the intake passages 7, 50 for disposing the injector 33 so as to enter between under the intake passages 7.

Forming the cross sections on the upstream sides of the intake passages 7, 50 in the square shape, disposing the injector 33 between under the intake passages 7, 50, and forming the attachment recesses 7b, 50a for disposing the injector 33 under the intake passages 7, 50 as described above, the intake passages 7, 50 and the injector 33 are disposed efficiently. Since the intake passages 7, 50, the injector 33, and the swirl control valve 31 are disposed efficiently, the arrangement is lightweight and compact for securing the same flow rate.

Since the swirl control valve 31 is disposed in the square cross-sectional portion and since the attachment recesses 7b, 50a are formed on the downstream side of the swirl control valve 31 and under the intake passages 7 and 50, air flow is constricted. As a result, air flows through the upper part of the intake passages 7 and 50 and then turns downward. Therefore, a tumble air flow is likely to occur.

As described above, with the invention of claim 1, the attachment recess caving in between under the paired intake passages is provided for attaching the injector, and the injector is disposed in the attachment recess. This provides a structure that is easy to secure the space for disposing the injector and compact.

With the invention of claim 2, since the cross sections of the paired intake passages are formed square, the part between the intake passages need not be thickened. As a result, a lightweight, compact internal combustion engine is provided.

With the invention of claim 3, since the swirl control valve is disposed in one of the intake passages and the injector is disposed on the downstream side of the swirl control valve, the swirl control valve is disposed efficiently. This provides a lightweight, compact structure to secure the same flow rate.

## Claims

1. Internal combustion engine (1 ) comprising a cylinder block (2), a cylinder head (3) fastened to said cylinder block (2), at least one cylinder (2a) formed in said cylinder block (2), said cylinder (2a) having a combustion chamber (6) formed by a reciprocable piston (5) within said cylinder (2a) and by said cylinder head (3), a first pair of intake passages (7) opening into said combustion chamber (6) and an injector (33) for injecting fuel into said combustion chamber (6), **characterized in that** said first pair of intake passages (7) being provided with attachment recesses (7b) for accommodating said injector (33).

2. Internal combustion engine according to claim 1, **characterized in that** said injector (33) being disposed between said first pair of intake passages (7) and at their respective undersides.

3. Internal combustion engine according to claim 1 or 2, **characterized in that** said first pair of intake passages (7) being provided within said cylinder head (3) and that at the respective upstream ends a respective second pair of intake passages (50) are connected being the downstream part of a single intake passage (30).

4. Internal combustion engine according to claim 3, **characterized in that** said second pair of intake passages (50) being provided with further recesses (50a) corresponding to said recesses (7b).

5. Internal combustion engine according to at least one of the preceding claims 1 to 4, **characterized in that** the cross-sections of said first and second, respectively, pairs of intake passages (7,50) being square-shaped.

6. Internal combustion engine according to at least one of the preceding claims 3 to 5, **characterized in that** near an upstream end of one of said second pair of intake passages (50) there is provided a swirl control valve (31 ).

7. Internal combustion engine according to claim 6, **characterized in that** said injector (33) being positioned downstream of said swirl control valve (31 ).

8. Internal combustion engine according to claim 6 or 7, **characterized in that** said swirl control valve (31 ) being operable by a driving motor (35) in response to at least one of the engine operating states detected.

9. Internal combustion engine according to claim 8, **characterized in that** the engine operating state is the engine revolution.

10. Internal combustion engine according to at least one of the preceding claims 1 to 9, **characterized in that** said cylinder head (3) being provided with an attachment hole (60) and an attachment recess (61) for attaching said injector (33).

11. Internal combustion engine according to at least one of the preceding claims 3 to 10, **characterized in that** the respective cross-sections of said first and second pairs of intake passages (7,50) are increasing starting from respective openings (7a) into the combustion chamber (6) of said first pair of intake passages.

12. Internal combustion engine according to at least one of the preceding claims 1 to 11, **characterized in that** said engine is a three-cylinder in-line engine (1 ) of the four-stroke cycle type.

## Patentansprüche

1. Brennkraftmaschine (1 ) mit einem Zylinderblock (2), einem Zylinderkopf (3), befestigt an dem Zylinderblock (2), zumindest einem Zylinder (2a), gebildet in dem Zylinderblock (2), wobei der Zylinder (2a) eine Brennkammer (6) hat, gebildet durch einen hin- und hergehenden Kolben (5) innerhalb des Zylinders (2a) und durch den Zylinderkopf (3), einem ersten Paar von Einlasskanälen (7), die sich in die Brennkammer (6) öffnen und einem Einspritzer (33) zum Einspritzen von Kraftstoff in die Brennkammer (6), **dadurch gekennzeichnet, dass** das erste Paar der Einlasskanäle (7) mit Verbindungsaussparungen (7b) zum Aufnehmen des Einspritzers (33) versehen ist.

2. Brennkraftmaschine nach Anspruch 1, **dadurch gekennzeichnet, dass** der Einspritzer (33) zwischen dem ersten Paar von Einlasskanälen (7) und an ihren jeweiligen Unterseiten angeordnet ist.

3. Brennkraftmaschine nach Anspruch 1 oder 2, **dadurch gekennzeichnet, dass** das erste Paar der Einlasskanäle (7) innerhalb des Zylinderkopfes (3) vorgesehen ist und dass an den jeweils stromaufwärtigen Enden ein jeweils zweites Paar von Einlasskanälen (50) verbunden ist, die den stromabwärtigen Teil eines einzigen Einlasskanales (30) bilden.

4. Brennkraftmaschine nach Anspruch 3, **dadurch gekennzeichnet, dass** das zweite Paar von Einlasskanälen (50) mit weiteren Aussparungen (50a) entsprechend den Aussparungen (7b) versehen ist.

5. Brennkraftmaschine nach zumindest einem der vorhergehenden Ansprüche 1 bis 4, **dadurch gekennzeichnet, dass** das die Querschnitte der jeweils ersten und zweiten Paare von Einlasskanälen (7, 50) quadratisch geformt ist.

6. Brennkraftmaschine nach zumindest einem der vorhergehenden Ansprüche 3 bis 5, **dadurch gekennzeichnet, dass** nahe eines stromaufwärtigen Endes des zweiten Paares von Einlasskanälen (50) ein Wirbelsteuerventil (31 ) vorgesehen ist.

7. Brennkraftmaschine nach Anspruch 6, **dadurch gekennzeichnet, dass** der Einspritzer (33) stromab des Wirbelsteuerventils (31 ) positioniert ist.

8. Brennkraftmaschine nach Anspruch 6 oder 7, **dadurch gekennzeichnet, dass** das Wirbelsteuerventil (31 ) durch einen Antriebsmotor (35) in Abhängigkeit von zumindest einem der erfassten Motorbetriebszustände betätigbar ist.

9. Brennkraftmaschine nach Anspruch 8, **dadurch gekennzeichnet, dass** der Motorbetriebszustand die Motorumdrehzahl ist.

10. Brennkraftmaschine nach zumindest einem der vorhergehenden Ansprüche 1 bis 9, **dadurch gekennzeichnet, dass** der Zylinderkopf (3) mit einer Befestigungsbohrung (60) und einer Befestigungsaussparung (61) zum Befestigen des Einspritzers (33) versehen ist.

11. Brennkraftmaschine nach zumindest einem der vorhergehenden Ansprüche 3 bis 10, **dadurch gekennzeichnet, dass** die jeweiligen Querschnitte der ersten und zweiten Paares von Einlasskanälen (7, 50), beginnend von den jeweiligen Öffnungen (7a) in die Brennkammer (6) des ersten Paares von Einlasskanälen, zunehmend sind.

12. Brennkraftmaschine nach zumindest einem der vorhergehenden Ansprüche 1 bis 11, **dadurch gekennzeichnet, dass** der Motor ein §- Zylinder- Reihenmotor vom 4- Takt- Typ ist.

## Revendications

1. Moteur à combustion interne (1) comprenant un bloc cylindres (2), une culasse (3) fixée sur ledit bloc cylindres (2), au moins un cylindre (2a) formé dans ledit bloc cylindres (2), ledit cylindre (2a) comprenant une chambre de combustion (6) formée par un piston à mouvement alternatif (5) monté à l'intérieur dudit cylindre (2a) et par ladite culasse (3), une première paire de passages d'admission (7) s'ouvrant à l'intérieur de ladite chambre de combustion (6), et un injecteur (33) destiné à injecter du carburant à l'intérieur de ladite chambre de combustion (6), **caractérisé en ce que** ladite première paire de passages d'admission (7) comporte des retraits de fixation (7b) destinés à recevoir ledit injecteur (33).

2. Moteur à combustion interne selon la revendication 1, **caractérisé en ce que** ledit injecteur (33) est disposé entre ladite première paire de passages d'admission (7) et sur leurs côtés inférieurs respectifs.

3. Moteur à combustion interne selon la revendication 1 ou la revendication 2, **caractérisé en ce que** ladite première paire de passages d'admission (7) est aménagée à l'intérieur de ladite culasse (3), et **en ce que**, aux extrémités amont respectives, une seconde paire de passages d'admission respectifs (50) est connectée comme étant la partie aval d'un passage d'admission unique (30).

4. Moteur à combustion interne selon la revendication 3, **caractérisé en ce que** ladite seconde paire de passages d'admission (50) comporte d'autres retraits (50a) correspondant aux dits retraits (7b).

5. Moteur à combustion interne selon au moins l'une des revendications précédentes 1 à 4, **caractérisé en ce que** les coupes transversales desdites première et seconde paires de passages d'admission respectives (7, 50) ont une forme carrée.

6. Moteur à combustion interne selon au moins l'une des revendications précédentes 3 à 5, **caractérisé en ce que**, à proximité d'une extrémité amont d'un passage de ladite seconde paire de passages d'admission (50), il est fourni un clapet de commande de tourbillon (31).

7. Moteur à combustion interne selon la revendication 6, **caractérisé en ce que** ledit injecteur (33) est positionné en aval dudit clapet de commande de tourbillon (31).

8. Moteur à combustion interne selon la revendication 6 ou la revendication 7, **caractérisé en ce que** ledit clapet de commande de tourbillon (31) peut être actionné par un moteur d'entraînement (35) en réponse à au moins l'un des états de fonctionnement du moteur détectés.

9. Moteur à combustion interne selon la revendication 8, **caractérisé en ce que** l'état de fonctionnement du moteur est le régime du moteur.

10. Moteur à combustion interne selon au moins l'une des revendications précédentes 1 à 9, **caractérisé en ce que** ladite culasse (3) comporte un orifice de fixation (60) et un retrait de fixation (61) destinés à la fixation dudit injecteur (33).

11. Moteur à combustion interne selon au moins l'une des revendications précédentes 3 à 10, **caractérisé en ce que** les coupes transversales desdites première et seconde paires de passages d'admission (7, 50) s'agrandit à partir de leurs ouvertures respectives (7a) à l'intérieur de la chambre de combustion (6) de ladite première paire de passages d'admission.

12. Moteur à combustion interne selon au moins l'une des revendications précédentes 1 à 11, **caractérisé en ce que** ledit moteur est un moteur à trois cylindres en ligne (1) de type à quatre temps.
